(19) Europäisches Patentamt
European Patent Office
Office européen des brevets

(11) Publication number: **0 420 272 A2**

# (12) EUROPEAN PATENT APPLICATION

(21) Application number: **90118687.4**

(51) Int. Cl.5: **C08G 18/00**, C08J 9/12

(22) Date of filing: **28.09.90**

(30) Priority: **29.09.89 IT 4100789**

(43) Date of publication of application: **03.04.91 Bulletin 91/14**

(84) Designated Contracting States: **AT BE CH DE DK ES FR GB GR LI NL SE**

(71) Applicant: **MONTEDIPE S.r.l.**
**31, Foro Buonaparte**
**I-20121 Milan(IT)**
(84) **BE CH DK ES GR LI NL SE AT**

Applicant: **AFROS S.P.A.**
**Via Galileo Ferraris 33**
**I-21042 Caronno Pertusella Varese(IT)**
(84) **DE FR GB**

(72) Inventor: **Fiorentini, Carlo**
**21, Via Volonterio**
**I-21047 Saronno, Varese(IT)**
Inventor: **Iommi, Giluliano, Dr.**
**12, Via Paganini**
**I-30035 Merano, Venezia(IT)**
Inventor: **Cancellier, Vito**
**1/2, Via Raoul Collerau**
**I-30027 San Dona' di Piave, Venezia(IT)**
Inventor: **Checchin, Michele, Dr.**
**3, Via Ischia**
**I-30174 Zelarino, Venezia Mestre(IT)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8**
**W-8000 München 40(DE)**

## (54) Process for the manufacture of moulded articles of polyurethane foam and articles obtained thereby.

(57) Described is a process for the manufacture of moulded articles made of polyurethane foams which comprises the reaction of at least one polyisocyanate with at least one compound containing active terminal hydrogen atoms wherein difluoromonochloromethane, dissolved in at least one of the two reactants, is used as foaming agent.

EP 0 420 272 A2

# PROCESS FOR THE MANUFACTURE OF MOULDED ARTICLES OF POLYURETHANE FOAM AND ARTICLES OBTAINED THEREBY

The present invention relates to a process for the manufacture of moulded articles (bodies) of polyurethane foams, and the articles obtained thereby.

The term "polyurethane foams" as used herein and in the appended claims denotes both rigid and flexible, soft, extra-soft and elastomeric polyurethane foams.

Polyurethane foams are used for various applications and generally are produced by means of a reaction between a formulated polyol and an isocyanate, in particular 2,4/2,6-toluene diisocyanate (TDI), diphenylmethane-4,4′-diisocyanate (MDI) and the higher molecular weight products of the homologous series based thereon or modifications thereof. A commonly used foaming agent is monofluorotrichloromethane, also known as CFC 11.

This foaming agent has been registered in the Montreal protocol in the list of chlorofluoroalkanes which are believed to be harmful to the environment, in that it changes and destroys the ozone layer present in the stratosphere. It has, therefore, become necessary to gradually reduce the employed amount thereof.

A method which is adopted at present is the expansion by $CO_2$, generally obtained from the reaction of isocyanate and water.

The use of a high concentration of water in the formulated products, and consequently of $CO_2$ in the foam, entails, however, considerable disadvantages, e.g.:

a. in rigid foams:

- higher initial thermal conductivity;
- more rapid increase of thermal conductivity over time, owing to the greater permeability of the $CO_2$ in the polymer, with consequent entry of air;
- dimensional instability of the foam when heated;
- higher surface friability with consequent problems of adhesion to the various sublayers;
- higher exothermicity of the isocyanate-polyol reaction, resulting in deformation of the manufactured products;
- higher consumption of isocyanate;

b. in flexible foams:

- higher exothermicity with possible thermal degradation of the polymer;
- greater problems regarding the compatibility of the water in the system, resulting in a loss of the balance between the foaming and polymer formation reactions and the possibility of collapse or breakage of the foam;
- higher consumption of isocyanate;
- difficulty of obtaining foams having a low density ($D \leqq 35$ kg/m$^3$) and a load-bearing capacity $\leqq 150$ N at 40% compression in accordance with ISO 2439;
- impossibility of obtaining "integral skin" foams.

An alternative to the use of $CO_2$ obtained from the reaction between isocyanate and water is the use of liquid $CO_2$ mixed with one or both of the polyurethane components. However, not very satisfactory results have been obtained with this method.

To overcome these and other disadvantages there is a need to select a substitute for monofluorotrichloromethane (CFC 11), whose use is not prohibited by the Montreal protocol and which already is commercially available in large quantities.

Another essential condition is that this new foaming agent can be used with industrial technologies at least similar to those already adopted and that the final properties of the polyurethanes are not inferior to those of the polyurethanes obtained with CFC 11.

There has now been found a process for the manufacture of polyurethane foams which uses difluoromonochloromethane as foaming agent. Difluoromonochloromethane is not registered in the Montreal protocol and satisfies all the necessary requirements mentioned above without showing any of the disadvantages associated with the use of $CO_2$.

The present invention, therefore, provides a process for the manufacture of moulded articles of polyurethane foam which comprises the reaction of at least one polyisocyanate with at least one compound containing active terminal hydrogen atoms in the presence of a foaming agent which comprises liquid difluoromonochloromethane dissolved in at least one of said two reactants (components).

The difluoromonochloromethane can be dissolved in the polyisocyanate and/or in the component containing active terminal hydrogen atoms.

Preferably, however, the difluoromonochloromethane is dissolved in the reactant containing active

terminal hydrogen atoms.

The difluoromonochloromethane is added to one of the polyurethane components in quantities which depend on the kind of polyurethane foam one wishes to produce. Generally, however, quantities of at least 1 part by weight per 100 parts of polyurethane component, and preferably from 5 to 50 parts per 100 parts are used.

Any suitable method for dissolving the difluoromonochloromethane in one of the polyurethane components may be used in this invention.

For example, the dissolution operation can be carried out in a closed container continuously, semi-continuously or batchwise, at room temperature and by adding the difluoromonochloromethane in liquid form.

The mixing may be effected by means of gentle, prolonged stirring, for a period of from, e.g., 2 to 4 hours, or by rapid, vigorous stirring for not more than 40 minutes, for example 10 to 40 minutes, using special high energy mixers.

The mixing of difluoromonochloromethane can also be carried out directly in the mixing head of a foaming machine.

More specifically, a preferred process for the manufacture of moulded articles of polyurethane foams includes the reaction of at least one component based on a polyisocyanate with at least one second component based on a compound containing active terminal hydrogen atoms in the presence of a foaming agent which includes liquid difluoromonochloromethane dissolved in at least one of the reagents, the dissolution of the difluoromonochloromethane being carried out by stirring in a closed container, under an initial pressure which is equal or similar to that at which the difluoromonochloromethane is added. The stirring may be carried out continuously or discontinuously for a period of time which is sufficient to bring about a reduction in pressure due to the absorption of the difluoromonochloromethane in the polyurethane component(s).

The suitability of difluoromonochloromethane as foaming agent for polyurethane foams is quite surprising considering the fact that, although its boiling point at atmospheric pressure is approximately -41 °C, it affords homogeneous and stable mixtures with polyurethane components, which mixtures have a low vapor pressure, generally of less than 3 bar. Said mixtures can, consequently, be stored for relatively long periods and can easily be transferred to the feeding tanks of the foaming machines, from which they are withdrawn to make them react, by using any kind of technology, for the production of homogeneously expanded materials having a predetermined density.

Examples of technologies suitable for the process of this invention can be found, e.g., in "Saunders and Frisch - Polyurethanes, Chemistry and Technology", Interscience, New York, 1964.

Rigid and non-rigid foams, in the whole density range, also obtainable by means of the well-known Reaction Injection Moulding (RIM) technology can be obtained with this process.

Under the conditions of the above process there is a minimum loss of the foaming agent which, being efficiently retained, causes a regular expansion and results in foams which have a regular cell structure and better physico-mechanical characteristics from the point of view of homogeneity and low data dispersion, as compared to polyurethane foams obtained under conditions in which the homogenization of the difluoromonochloromethane is not complete.

More specifically, in the case of rigid foams, compared to improper use of difluoromonochloromethane, the following results are obtained:

- better flow of the foam and, consequently, easier filling of the cavities;
- lower thermal conductivity of the foam, with values similar to those obtained with CFC 11;
- higher thermo-stability of the foam;
- low increase over time in the thermal conductivity similar to that of foam expanded with CFC 11.

Any organic polyisocyanate suitable for the production of polyurethane foams may be used in this invention, even though aliphatic, cycloaliphatic and aromatic polyurethanes and their corresponding alkyl substituted derivatives are preferred.

In particular, low molecular weight diisocyanates having a general formula (I) may be used:

OCN-R-NCO (I)

wherein R represents an aliphatic, optionally alkyl substituted cycloaliphatic or optionally alkyl substituted aromatic radical having 1 to 30 carbon atoms, such as trimethylhexamethylene-2,2,4-diisocyanate, ethylidene diisocyanate, butylene diisocyanate, hexamethylene diisocyanate, cyclohexylene-1,4-diisocyanate, cyclohexylene-1,2-diisocyanate, dichlorohexamethylene diisocyanate, xylylene diisocyanate, meta- and/or para-phenylene diisocyanate, toluene-2,4-diisocyanate, pure or mixed with its isomer toluene-2,6-diisocyanate, diphenylmethane-4,4′-diisocyanate, pure or mixed with its 2,4′-isomer, dicyclohexylmethane-4,4′-diisocyanate, 1-isocyanato-3-isocyanatomethyl-3,3,5-trimethylcyclohexane (or

isophorone-diisocyanate), etc..

Toluene-2,4-diisocyanate (TDI), either pure or mixed with at least 20% by weight of its 2,6-isomer, and diphenylmethane-4,4′-diisocyanate (MDI), either pure or mixed with at least 5% by weight of its 2,4′-isomer, are particularly preferred diisocyanates of general formula (I).

Undistilled or unrefined toluene diisocyanate, i.e. partially purified toluene diisocyanate extracted from any of the distillation tower trays, may normally be used, too.

Alternatively, it is possible to use medium or high molecular weight polyisocyanates with varying degrees of condensation which are obtainable by means of the reaction of phosgene with aniline-formaldehyde condensates. These products are composed of mixtures of polymethylene-polyphenyl-polyisocyanates having the general formula (II):

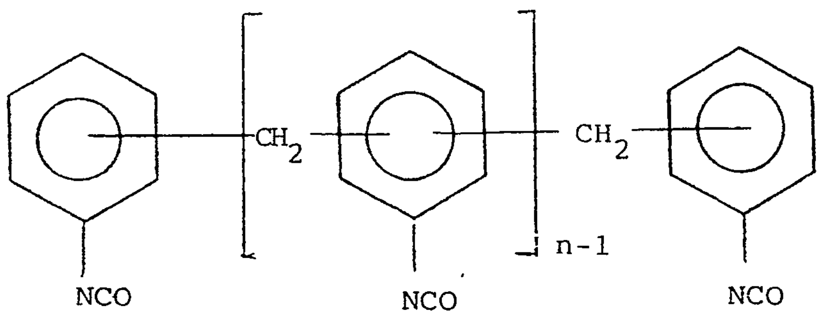

(II)

wherein n is an integer equal to or greater than 1.

In the case of medium or high molecular weight polyisocyanates, it is preferable to use mixtures of polymethylene-polyphenyl-polyisocyanates having an average functionality of 2,6 to 2,8. Said products are sold under various tradenames such as "Tedimon ® 31" (Montedipe), "Suprasec ® DNR" (I.C.I.) and "Desmodur ® 44 V 20" (BAYER).

Further examples of polyisocyanates which can be used in the process of the present invention are isocyanate prepolymers obtained from the reaction of polyisocyanates having general formulae (I) and (II) with less than the equivalent amount of polyols and/or polyamines having a hydroxy and/or amine functionality of at least 2 and an average molecular weight of from 60 to 8000.

Generally, the component containing active terminal hydrogen atoms comprises at least one polyether polyol. For example, such polyols may have a low molecular weight and contain at least two active hydrogen atoms, such as glycols, triols, tetrols, polyamines, alkanolamines and mixtures thereof. Specific examples thereof are dipropylene glycol, 1,4-butylene glycol, glycerol, trimethylolpropane, pentaerythritol, sorbitol, ethylenediamine, triethanolamine, etc..

Further examples of suitable polyether polyols are those which have a higher molecular weight, for instance of from 500 to 8000, and a hydroxy and/or amine functionality of at least 2, obtained by condensing mixtures of $C_2$ - $C_6$ oxides with starter compounds having at least two active hydrogen atoms, similar to those mentioned above. The preferred higher molecular weight polyols are those obtained from ethylene oxide and/or propylene oxide.

Apart from the above-mentioned substances, additives such as catalysts, stabilizers, pigments, curing agents, cell regulators and other foaming agents (such as water, liquid $CO_2$ etc.) may be present. Their use is illustrated and described in publications such as "Saunders and Frisch - Polyurethanes, Chemistry and Technology" Interscience, New York 1964.

The present invention also provides moulded articles of polyurethane foams obtainable by the processes described above.

The preferred moulded articles of polyurethane foam are those which have been obtained in the presence of a foaming agent which may even include water.

The moulded articles of the present invention may be employed in the fields of refrigeration, heat insulation, furniture, transportation, house and office appliances, etc..

Specific examples of moulded articles of the present invention are heat insulating structures, panels, cabinets for house and office appliances, seats for upholstered furniture or vehicles, arms for chairs and car components such as head-rests and dash-boards, etc..

In particular, the moulded articles of the present invention are all those articles which normally are obtained by means of CFC 11, for example, by the continuous or discontinuous block technology; moulded,

semi-rigid, of medium or high density, and even those included in the field of microcellular elastomeric products and RIM, etc.

The moulded articles of the present invention can be obtained by continuous, semi-continuous and batch-wise processes and, compared to similar products obtained from foams expanded with $CO_2$ only, have the following advantages:

a. in the field of rigid foams:
- significant reduction of the exothermicity of the polycondensation reaction;
- lower consumption of polyisocyanate;
- no surface friability of the foam and stronger adhesion to the sublayers;
- dimensional stability of the foam when heated;
- lower initial thermal conductivity;
- lower increase in the thermal conductivity over time, of the same order as with products obtained with CFC 11;

b. in the field of flexible foams:
- more regular and homogeneous structure of the foams with open cells and high transpiration;
- possibility of obtaining foams with low density and load-bearing capacity, i.e. D $\leq$35 kg/m$^3$ and a load-bearing capacity $\leq$150 N at 40% compression, according to ISO 2439;
- reduction or elimination of thermal degradation;
- possibility of obtaining surface thickening of the polyurethane which is typical of "integral skin" foams; and
- elimination of incompatibility between water and the reagent system.

The following non-limitative examples are to illustrate the present invention. The amounts of the components in the formulations are given as parts by weight, unless otherwise indicated.

EXAMPLE 1

100 parts of a conventional polyether-polyol based on sorbitol and propylene oxide, with an OH number of 490 mg KOH/g and containing 2.5 parts of water, were poured into a tank suitable for operating under pressure and equipped with a helix stirrer.

30 parts of liquid difluoromonochloromethane (HCFC 22) were added to and dissolved in the polyol (9 bar initial pressure) at a temperature of about 20° C.

After 1 hour the pressure had decreased to about 2.5 bar.

Once the foaming agent had been dissolved, the polyol mixture, as homogeneous and stable phase, was transferred to the tank of a high pressure foaming machine such as Cannon ® A100 with a FPL mixing head.

132.5 parts of this mixture were reacted with 137 parts of polymeric MDI (Tedimon ® of Montedipe) in the presence of an amine catalyst and a silicon surfactant, following conventional methods. A rigid polyurethane foam with closed cells was obtained in a closed mould, having the following characteristics:

Density = 35 kg/m$^3$
Free density = 22 kg/m$^3$
Maximum compression strength = 157 kPa
Closed cells = 94%
Compression stress at 10% deflection = 125 kPa
Thermal conductivity at 23° C = 0.0215 W/mK

EXAMPLE 2 (comparison)

The polyisocyanate composition of example 1 was used and 45 parts of liquid HCFC 22, with respect to the polyol, were poured into the tank of the foaming machine of example 1 at a temperature of 20° C. The reaction took place when the pressure in the tank still was approximately 9 bar.

In another test, HCFC 22 was fed directly into the mixing head of the foaming machine under conditions which did not guarantee complete dissolution thereof.

In both cases rigid foams with a rough, non-homogeneous appearance and unsuitable for industrial use were obtained.

EXAMPLE 3

100 parts of polyether-triol (starter: glycerol) based on propylene oxide and ethylene oxide, with an OH number of 28 mg KOH/g and having about 15% of primary hydroxy end groups, were mixed with 1.5 parts of DEA (diethanolamine), 3.2 parts of water and 10 parts of liquid HCFC 22 in a stirred container suitable for maintaining mixtures under pressure (initial pressure of about 9 bar).

After about half an hour, the pressure had decreased to 2 bar and the whole mixture was transferred to the tank of a high pressure foaming machine.

114.7 parts of this mixture were reacted with 42 parts of a 70/30 mixture of polymeric TDI/MDI (Tedimon ® 80/Tedimon ® 31 of Montedipe) in the presence of an amine catalyst and a silicon surfactant, following conventional methods, and poured into a mould for the production of car seats, kept at a constant temperature of 45° C.

After about 5 minutes, a piece of the foam was removed from the mould, which piece had the required shape, weight and dimensions and showed the following characteristics:

Density = 40 kg./$m^3$
Free density = 25 kg/$m^3$
Load-bearing capacity at 40% compression (ISO 2439) = 110 N
Ultimate elongation = 100%
Compression set (22 hrs x 70° C at 50% RH) = 9%
Open cells = 80%
Impact strength (Ball rebound) = 50%
Sag Factor = 3

## Claims

1. Process for the manufacture of moulded articles of polyurethane foam, comprising the reaction of at least one polyisocyanate with at least one compound containing active terminal hydrogen atoms in the presence of a foaming agent which comprises liquid difluoromonochloromethane dissolved in at least one of said at least two reactants.

2. Process according to claim 1, wherein the difluoromonochloromethane is dissolved in one or more of the components containing active terminal hydrogen atoms.

3. Process according to any one of the claims 1 and 2, wherein the difluoromonochloromethane is added to one or more of the polyurethane components in amounts of at least 1 part by weight per 100 parts of polyurethane component, particularly in amounts of from 5 to 50 parts per 100 parts of polyurethane component.

4. Process according to any one of the preceding claims, wherein the dissolution operation is carried out in a closed container continuously, semi-continuously or batchwise and with the difluoromonochloromethane being added in liquid form.

5. Process according to any one of the preceding claims, wherein the polyisocyanate is selected from diisocyanates of general formula (I):

OCN-R-NCO (I)

wherein R is an aliphatic, optionally alkyl substituted cycloaliphatic or optionally alkyl substituted aromatic radical having from 1 to 30 carbon atoms.

6. Process according to any one of claims 1 to 4, wherein the polyisocyanates have varying degrees of condensation, are obtainable by the reaction of aniline-formaldehyde condensates with phosgene and are composed of mixtures of polymethylene-polyphenyl-polyisocyanates of general formula (II):

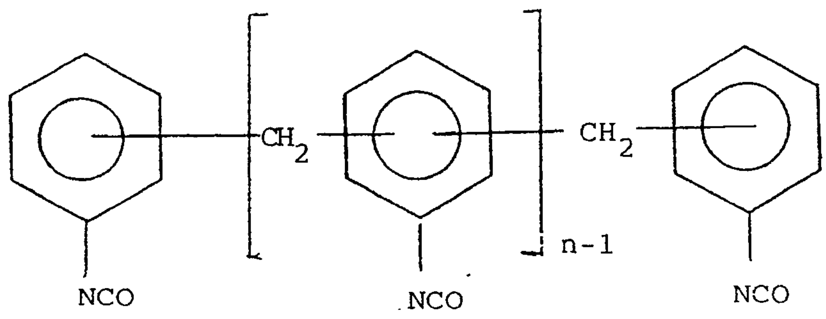

(II)

wherein n represents an integer of at least 1.

7. Process according to any one of claims 1 to 4, wherein the polyisocyanates are isocyanate pre-polymers obtainable by the reaction of polyisocyanates of general formulae (I) and (II) with less than the equivalent amount of polyols and/or polyamines having a hydroxy and/or amine functionality of at least 2 and an average molecular weight of from 60 to 8000.

8. Process according to any one of the preceding claims, wherein the component containing active terminal hydrogen atoms comprises at least one polyether polyol.

9. Process according to any one of the preceding claims, wherein the difluoromonochloromethane is dissolved by stirring in a closed container under an initial pressure substantially equal to the feeding pressure of the difluoromonochloromethane, said stirring being carried out continuously or discontinuously for a period of time sufficient to bring about a reduction in pressure due to the absorption of the difluoromonochloromethane in the polyurethane component.

10. Process according to any one of the preceding claims, wherein the foaming agent also comprises water.

11. Moulded articles,obtainable according to the process of any one of claims 1 to 10.

12. Moulded articles according to claim 11, in the form of heat insulating structures, panels, cabinets for house and office appliances, seats for furniture or vehicles, arms for chairs and internal car components such as headrests and dash-boards.

13. Use of the moulded articles according to any one of claims 11 and 12 in the fields of refrigeration, heat insulation, furniture, transportation and house and office appliances.

14. Homogeneous and stable mixtures of polyurethane component and difluoromonochloromethane.

15. Mixtures according to claim 14, wherein the polyurethane component contains active terminal hydrogen atoms.

16. Mixtures according to any one of claims 14 and 15, having a vapor pressure of less than 3 bar.